# FASCICULE DE BREVET EUROPEEN

(11) **EP 0 455 845 B1**
(45) Date de publication et mention de la délivrance du brevet: **12.01.1994**
(21) Numéro de dépôt: 90108583.7
(22) Date de dépôt: 07.05.1990
(51) Int. Cl.: A23F 5/26

(54) **Procédé d'extraction en phase liquide de café**
Verfahren zur Kaffeeextraktion in flüssiger Phase
Process for extraction of coffee in liquid phase

(43) Date de publication de la demande: 13.11.1991
(73) Titulaire: SOCIETE DES PRODUITS NESTLE S.A., 1800 Vevey (CH)
(72) Inventeur: Schlecht, Klaus, CH-1350 Orbe (CH); Wehrspann, Olaf, CH-1350 Orbe (CH)

(56) Documents cités:
- FR-A- 1 604 735
- FR-A- 2 126 170
- US-A- 3 035 921
- US-A- 3 361 571
- Coffee Technology, 1979, pages 370-379, Avi Publishing, Westport, Connecticut, USA, M. Sivetz.

## Description

La présente invention est relative à un procédé d'extraction en phase liquide de café.

Pour extraire industriellement le café, dans le cadre d'un processus de fabrication de café soluble, il est connu de faire passer de l'eau chaude dans des cellules remplies de café torréfié moulu (Sivetz - Coffee Processing Technology volume 1 pages 262-263-AVI-1963).

L'extraction est réalisée à contre courant, c'est-à-dire que de l'eau chaude, sous pression à une température comprise entre 150°C et 180°C, est introduite dans la cellule contenant la charge de café torréfié moulu qui a été la plus épuisée en ayant subi N extractions, généralement à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais.

L'extrait final sort de cette dernière cellule à une température de l'ordre de 100°C.

Ainsi, le café le plus épuisé est soumis à la température la plus élevée alors que le café frais est soumis à la température la plus basse.

On distingue classiquement les cellules chaudes, qui contiennent le café le plus épuisé, des cellules froides, qui contiennent le café le moins épuisé.

A la fin de chaque cycle d'extraction, on vide la cellule contenant le café le plus épuisé, on la remplit de café frais et, après avoir relié convenablement les cellules entre elles, un nouveau cycle d'extraction commence.

Bien que l'extrait final obtenu à la sortie de la cellule d'extraction contenant le café le plus frais ne présente qu'une faible quantité de particules de café moulu, des fines étant toujours entraînées il est souhaitable de filtrer cet extrait.

Enfin, après cette phase de filtration qui élimine les particules supérieures à environ 1 mm, il existe encore des matières solides en suspension telles que des polysaccharides qu'il convient d'éliminer afin de permettre, après concentration et lyophilisation ou atomisation de cet extrait, d'obtenir une poudre de café parfaitement soluble et n'engendrant pas l'apparition de matières solides dans la tasse.

Ces matières solides en suspension sont classiquement éliminées par centrifugation, la boue obtenue étant ensuite décantée, le liquide de décantation surnageant étant réintroduit dans l'extrait final filtré alors que le résidu solide obtenu est éliminé.

Ce procédé présente comme inconvénient principal de générer une boue qu'il faut retraiter par décantation et dont la manipulation n'est pas aisée.

US-A-3361 571 décrit un procédé d'extraction en continu du café en plusieurs étapes dans lequel l'extrait est clarifié par centrifugation et la boue est réintroduite dans une cellule d'extraction. Le procédé comporte aussi une opération de décaféination où l'extrait des étapes chaudes est clarifié et les boues sont retirées séparément du marc.

La demanderesse propose un procédé d'extraction en phase liquide du café qui résout le problème des boues.

La présente invention a donc pour objet un procédé d'extraction en phase liquide de café dans lequel un liquide d'extraction estamené à traverser à contre courant des cellules d'extraction contenant du café torréfié moulu, l'extrait final étant centrifugé, caractérisé en ce que la boue produite par l'opération de centrifugation est réintroduite dans au moins une cellule d'extraction.

Grâce à cette réintroduction de la boue produite par l'opération de centrifugation la manipulation de cette boue est grandement facilitée.

Pour la mise en oeuvre du procédé selon la présente invention on utilise un dispositif comprenant des cellules d'extraction caractérisé en ce que, à la sortie de la dernière cellule d'extraction, est prévu un dispositif de filtration prolongé par un dispositif de centrifugation présentant un conduit d'évacuation du liquide épuré et un circuit de recyclage de la boue de centrifugation vers les cellules d'extraction.

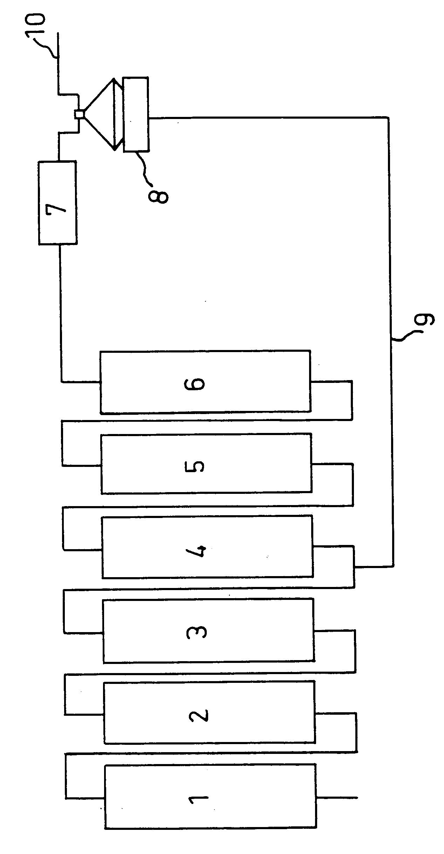

D'autres caractéristiques et avantages ressortiront à la suite de la description qui va suivre faite en référence à la figure annexée unique donnée seulement à titre d'exemple non limitatif et qui représente un schéma d'un dispositif pour la mise du procédé selon l'invention.

Comme on le voit à la figure unique, un dispositif d'extraction de café est constitué de plusieurs cellules d'extraction, fonctionnant en série, constituées chacune d'une colonne dont la partie inférieure est reliée à la partie supérieure de la colonne qui la précède et dont la partie supérieure est reliée à la partie inférieure de la colonne qui la suit.

Généralement un dispositif d'extraction est constitué de quatre à huit cellules d'extraction et, préférentiellement, de six cellules d'extraction.

La cellule 1 contient le café le plus épuisé tandis que la cellule 6 contient le café le moins épuisé, le niveau d'épuisement diminuant de la cellule 1 vers la cellule 6.

Le liquide d'extraction, constitué par de l'eau sous pression à une température comprise entre 150°C et 180°C, arrive par le bas de la cellule 1, traverse cette cellule de bas en haut en se chargeant en produit soluble, ressort à la partie supérieure de la cellule 1 et traverse successivement chacune des cellules jusqu'à traverser la cellule 6 qui est la dernière cellule et qui contient du café torréfié moulu frais.

L'extrait final, à la sortie de la cellule 6, est amené à traverser un dispositif de filtration 7 servant à ôter les particules en suspension, dont la plus petite dimension est supérieure à environ 1 mm, qui auraient pu être entraînées.

Après quoi on détermine un rendement apparent, Y app, correspondant au pourcentage de solides dans l'extrait final filtré par rapport aux solides secs dans la cellule 6 contenant le café frais.

Ensuite, il est nécessaire d'éliminer les matières solides encore en suspension dans l'extrait final. Pour cela, l'extrait final est centrifugé dans une centrifugeuse 8.

Dans le procédé selon l'art antérieur la boue produite par l'opération de centrifugation était simplement décantée, le surnageant, constitué de matières solubles, étant alors réintroduit dans l'extrait final filtré alors que la boue était simplement éliminée.

Le rendement réel, Y réel, d'un tel procédé est donc égal à Y app - Y boues, Y boues représentant la fraction non soluble présente dans les boues après décantation, ainsi que la fraction soluble résiduelle encore présente dans les boues.

Dans le procédé selon la présente invention, la boue, produit de centrifugation, est réintroduite dans les cellules d'extraction.

Un circuit de recyclage 9, de la boue de centrifugation, est donc prévu entre la centrifugeuse 8 et les cellules d'extraction, le liquide épuré produit par la centrifugation étant évacué par un conduit 10 pour subir ensuite un traitement classique en vue de la fabrication de poudre de café soluble.

Ainsi, les matières solides solubles sont entraînées par le flux d'extrait jusqu'à l'extrait final alors que les matières solides non solubles sont retenues sur le lit de café dans les cellules d'extraction et transportées dans les cellules chaudes où elles sont partiellement hydrolysées et donc solubilisées.

Préférablement, le produit de centrifugation est réintroduit à hauteur de la séparation entre les cellules chaudes et les cellules froides, c'est-à-dire entre la cellule d'extraction 3 et la cellule d'extraction 4.

Ainsi, le produit de centrifugation étant introduit dans la cellule froide qui suit immédiatement la dernière cellule chaude, lors du cycle suivant l'extraction, le produit de centrifugation se retrouve dans la première cellule chaude.

En effet, pour ne pas charger inutilement les cellules froides en produits non solubles mais hydrolysables, il est préférable que les boues soient directement introduites dans les cellules où elles vont être effectivement hydrolysées.

On observe ainsi, effectivement, une augmentation de l'épuisement réel, c'est-à-dire mesuré après centrifugation.

Ainsi, pour une température d'extraction de départ de 174°C et une température de la dernière cellule froide de 104°C, pour un débit de recirculation des boues de 420 kg par heure, avec 2000 kg de café rôti traité par heure, toutes conditions égales par ailleurs, des essais ont montré une augmentation nette de l'extraction réelle de l'ordre de 1% ce qui, dans ce secteur industriel, doit être considéré comme important.

Ainsi, en réintroduisant les boues de centrifugation dans le cycle d'extraction, d'une part, le problème de la manutention de ces boues est résolu puis, de plus, le rendement du processus d'extraction est sensiblement augmenté.

## Revendications

1. Procédé d'extraction en phase liquide de café dans lequel un liquide d'extraction est amené à traverser à contre courant une série de percolateurs contenant du café torréfié et moulu et l'extrait final est centrifugé, carctérisé en ce que la boue de centrifugation est réintroduite dans au moins un percolateur et est évacuée avec le marc de café épuisé.

2. Procédé d'extraction selon la revendication 1 caractérisé en ce que la boue est réintroduite entre les percolateurs chauds et les percolateurs froids.

## Claims

1. A process for the liquid-phase extraction of coffee in which an extraction liquid is passed in countercurrent through a series of percolators containing ground roasted coffee, the final extract being centrifuged, characterized in that the sludge obtained by the centrifugation step is reintroduced into at least one percolator and is removed with the spent coffee grounds.

2. An extraction process as claimed in claim 1, characterized in that the sludge is reintroduced between the hot percolators and the cold percolators.

## Patentansprüche

1. Verfahren zum Extrahieren von Kaffee in flüssiger Phase, bei welchem eine Extraktionsflüssigkeit im Gegenstrom durch eine Reihe von Perkolatoren geleitet wird, die gerösteten und gemahlenen Kaffee enthalten, und der endgültige Extrakt zentrifugiert wird, dadurch gekennzeichnet, daß der Zentrifugenschlamm in zumindest einen Perkolator wiedereingeführt und mit dem erschöpften Kaffeesatz ausgetragen wird.

2. Extraktionsverfahren nach Anspruch 1, dadurch gekennzeichnet, daß der Schlamm zwischen die heißen und die kalten Perkolatoren wiedereingeführt wird.
